Europäisches Patentamt

European Patent Office

Office européen des brevets

(11) Publication number: **0 049 521**
**A2**

## (12) EUROPEAN PATENT APPLICATION

(21) Application number: **81107998.7**

(22) Date of filing: **06.10.81**

(51) Int. Cl.³: **G 06 F 9/46**

(30) Priority: **08.10.80 JP 139836/80**

(43) Date of publication of application:
**14.04.82 Bulletin 82/15**

(84) Designated Contracting States:
**DE GB**

(71) Applicant: **Hitachi, Ltd.**
**5-1, Marunouchi 1-chome**
**Chiyoda-ku Tokyo 100(JP)**

(72) Inventor: **Nakanishi, Hiroaki**
**16-26, Moriyamacho-1-chome**
**Hitachi-shi(JP)**

(72) Inventor: **Kuwahara, Hiroshi**
**16-10, Omikacho-3-chome**
**Hitachi-shi(JP)**

(72) Inventor: **Ide, Jushi**
**473-44, Tonocho**
**Mito-shi(JP)**

(72) Inventor: **Hirai, Koji**
**2920-24, Mukaino**
**Mawatari Katsuta-shi(JP)**

(72) Inventor: **Kamiuchi, Toshiro**
**540-40, Josuiminamicho**
**Kodaira-shi(JP)**

(74) Representative: **Ebbinghaus, Dieter K.L. Schiff Dr. A. v.**
**Füner et al,**
**Dipl. Ing. P. Strehl Dr. U. Schübel-Hopf Dipl. Ing. D.**
**Ebbinghaus Dr. Ing. D. Finck Patentanwälte**
**Mariahilfplatz 2&3**
**D-8000 München 90(DE)**

(54) Information processing system.

(57) An operating system processor (3001) for managing resources concentrically, job processors (3002, ....., 300n) for executing processes input/output processors (4001, 4002, ...., 400n) for executing input/output processes, a file processor for executing input/output processing to a file system, and a main memory (200) are connected together by a common bus (100). The operating system processor (3001) receives a resource request from the job processors (3002, ....., 300n) so as to manage the allotment of resources to the job processors by referring to a resource management table (211, 212, ....., 21n), a processor management table (221, 222, ....., 22n), and waiting tables (231, 232, ....., 23n, 241, 242, ....., 24n).

./...

Croydon Printing Company Ltd.

F I G. I

- 1 -

# INFORMATION PROCESSING SYSTEM

This invention relates to an information processing system and particularly to a multiprocessor system having a plurality of processors connected together to a common bus to execute a plurality of processes in parallel.

One of the problems to be solved in the multiprocessor system is a conflicting management problem of a resource shared with a plurality of processors. If, for example, a plurality of processors simultaneously issue their requests of use of one input/output unit being shared, a problem occurs; which of the processors should be allowed to use the input/output unit.

In general, some priority decision is used to assign the resource to a processor. This requires existence of a certain communication between processors, in accordance with which a processing must be made.

Moreover, when the shared input/output unit becomes not in use, a processor waiting for the shared input/output unit to be assigned must be released from waiting, and the interprocessor communication is performed to each released-waiting processor.

Such message interchange is a resource assigning control operation added to the waiting release processing originally performed within in the same processor.

The message interchange between two processors will be simple, but that among a number of processors will need an appreciably large amount of processing for determination of a processor which is allowed to use the shared input/output unit next, or for the resource assigning control.

This resource management problem becomes more serious the closer the corelation among the dispersed services which the processors must do.

In other words, in the multiprocessor system, to obtain an expected performance or reliability, the linkage between processes dispersed in the respective processors is necessary not only for the sharing control of the shared input/output unit, but for the management of the shared main memory, the control of shared external memory having a close relation with the system operation and the like, and a message communication must be performed between processors for each processing.

A particular processor is used in common for assigning a process to each processor as disclosed in Japanese Patent Publication No. 20369/1978.

Therefore, it is an object of the invention to provide a multiprocessor system improved in its performance of the whole system by the dispersion of processes.

The feature of this invention is that at least one processor of a groop of processors has execusively a function of managing resources.

Other objects, features and advantages of this invention will become apparent from the following description taken in conjunction with the accompanying drawings in which:

Fig. 1 is a block diagram of one embodiment of this invention;

Fig. 2 is a block diagram of part of the embodiment of this invention of Fig. 1;

Figs. 3 to 6 are flow charts of the procedure of the message interchange between processors in this invention; and

Fig. 7 is a block diagram useful for general description of transmission and reception of message between processors.

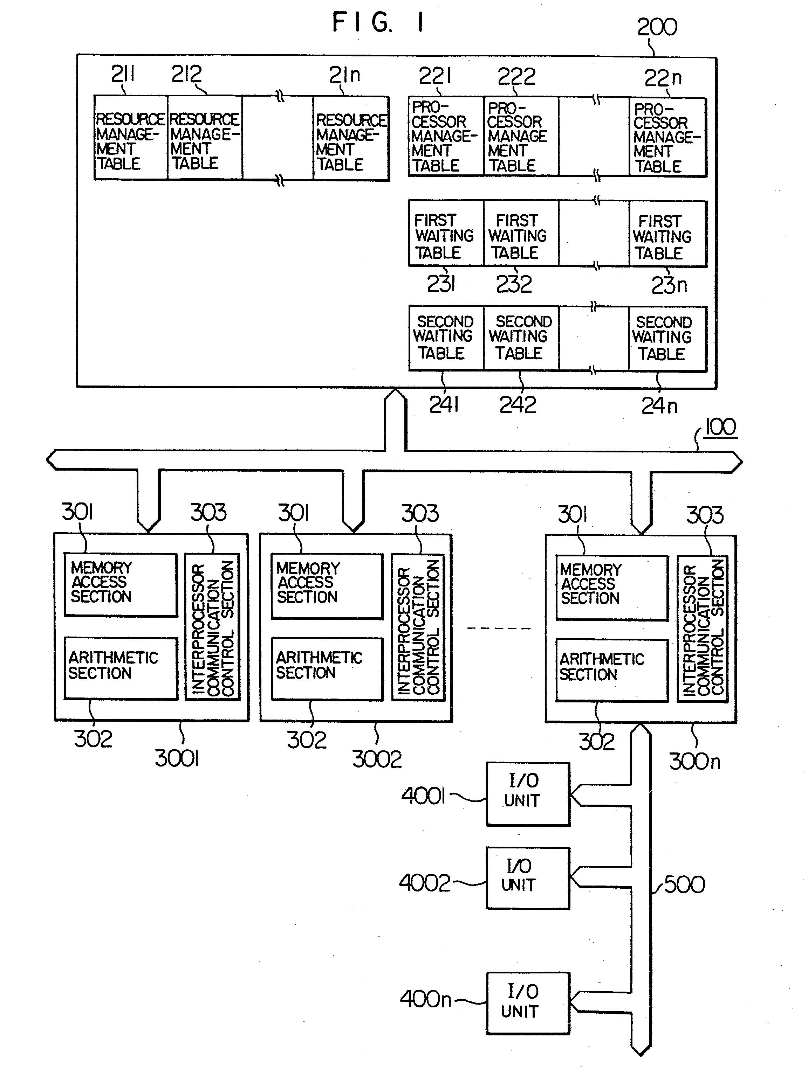

Referring to Fig. 1, there is shown a common bus 100 to which a main memory 200, and processors 3001, 3002, ....., 300n are connected. Of these processors, one processor, for example, 3001 in this invention functions as an operating system processor to assign a process to each processor, manage the reallocation of shared resources and instruct the other processors to operate. The other processors serve as job processors for performing the above processes, file processors for performing input/output processesing to a file system not shown, or input/output processors for controlling general shared input/output units represented by 4001, 4002, ....., 400n. In the illustrated embodiment, the processor 300n is the input/ output processor which is connected to the input/output units 4001, 4002, ....., 400n via an input/output bus 500.

In this invention, the term, "process" is a processing program called "user program" and analogous to the processing program called "task".

The file processor is a processor having a function to connect and control a file system, for example a magnetic disc apparatus which needs to transfer a large amount of data. This processor chiefly serves to manage the buffer mechanism and data address assocuated with the data transfer between the file system and the main memory 200.

The input/output processor 300n is a processor for controlling the data transfer between the main memory 200 and the general, shared input/output units 4001, 4002, ......, 400n connected to the common input/output bus 500, and chefly serves to manage the buffer mechanism and address associated with the data transfer.

Each processor, 3001, 3002, ....., 300n has a memory access section 301 serving as an access means to the shared memory 200, an arithmetic section 302 for performing decision and processing as a processor, and an interprocessor communication control section 303 including a function capable of recognizing which processor issued an interruption for interchange of messages between the operating system processor 3001 and the other processors 302, ....., 300n. Of course, the communication control section 303 of the input/output processor 300n includes a function of controlling the communication with the input/output units 4001, 4002, ....., 400n via the input/output bus 500.

The main memory 200 has the information concerning the process as set forth above and the following tables:

A resource management table 211, 212, ....., 21n for indicating which process exclusively prossesses shared resources such as a predetermined area of the main memory, input/output units 4001, 4002, ....., 400n, processors 3002, ....., 300n and so on.

A processor management table 221, 222, ....., 22n for indicating which process is assigned to each processor 3002, ....., 300n and which process of each processor is being executed.

A first waiting table 231, 232, ....., 23n for indicating a process which is now waiting for a processor to execute.

A second waiting table 241, 242, ....., 24n for indicating a process which is now waiting a resource and being interrupted in processing algorithm.

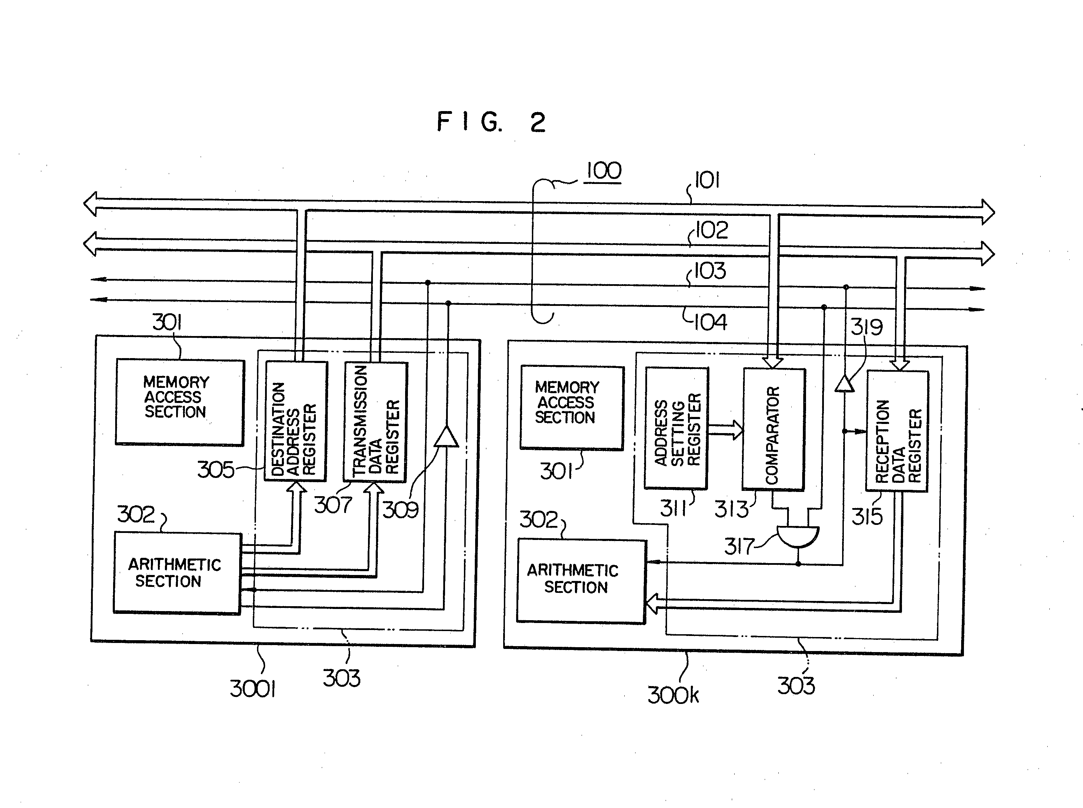

Fig. 2 is a block diagram of a specific example of the communication between processors. In Fig. 2, the operating system processor 3001 supplies an interruption input to an arbitrary job processor 300k. The communication control section 303 of the processor 3001 has for transmission a destination address register 305, a transmission driver 309. The communication control section 303 of the processor 300k has for reception an address setting register 311, a comparator 313, a reception data register 315, an AND gate 317 and a transmission driver 319. The communication between the communication control sections is performed via the common bus 100. That is, the address register 305 is connected to the comparator 313 by an address bus 101, the data register 307 to the data register 315 by a data bus 102, the driver 319 to the arithmetic section 302 by a contact line 103, and the driver 309 to the AND gate 317 by a contact line 104.

The operating system processor 3001 supplies an address of the job processor 300k to be interrupted, and a transmission data indicating the contents of the interruption from the arithmetic section 302, and the address and the data are set in the registers 305 and 307, respectively. At the same time, the transmission driver 309 is driven by the arithmetic section 302 at a predetermined timing.

The job processor 300k allows the comparator 313 to produces an output when the data on the address bus 101 coincides with that in the address register 311. This output from the comparator 313 is logically multiplied by the output on the contact line 104, at the AND gate 317. When the AND gate 317 produces output, the data on the data bus 102 is stored in the register 315. The output from the AND gate 317 also interrupt the arithmetic section 302 in the same job processor, drives the driver 319 and triggers via the contact line 103 the transmission-side arithmetic section 302 to inform the reception of interruption.

When the interruption input is transmitted from the job processor 300k to the operating system processor 300l, the same operation can be realized by providing unit (not shown) corresponding to the control section 303 of the processor 300l in the processor 300k and by providing unit (not shown) corresponding to the control section 303 of the processor 300k in the processor 300l.

Under the above arrangement, replacement of resources according to this invention is performed by the following procedure.

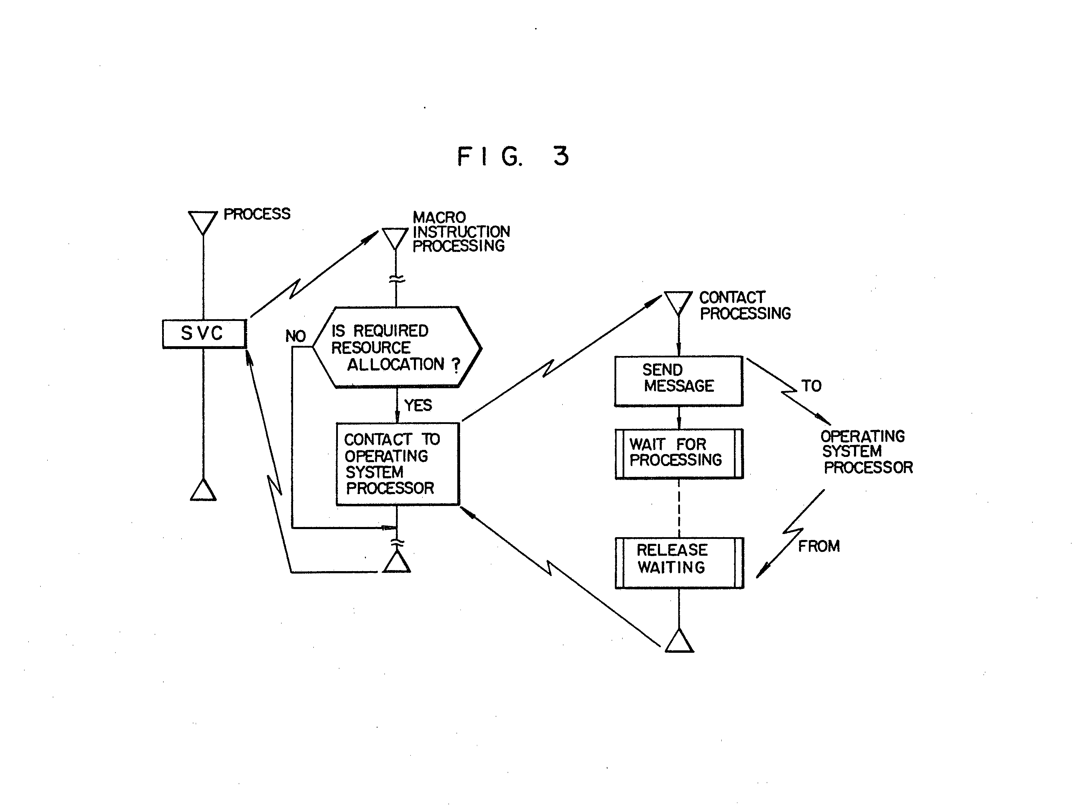

Fig. 3 shows one example of the operation of the job processor.

When an SVC (super visor call) instruction is issued during a process, a macro instruction processing of the operating system within the job processor 300m is started. The macro instruction processing is performed as requested by a processing code and parameter specified by a user program. The processing is generally the starting and stopping of other processes, communication, starting of the shared input/output unit, input and output of timer information and the like as the functions of the operating system. However, since some of these contents of the processing are accompanied by resource conflict with other processors, the necessity of reallocation of resources is decided.

Here, the decision of whether the reallocation of resources is necessary or not shows the following processing. In general, the resource for a process includes physical resources such as the arithmetic control mechanism as a general name of processor (in this embodiment, job processors 3002, ....., 300n), the input/output units 4001, 4002, ....., 400n and specific areas of the main memory 200, and logic resources such as data in which conflict occurs for reasons of processing of process. Most of the SVC instruction includes the processing of managing such resource with supervisor level, typically the following processing. From the process view point, processing by process itself cannot achieve to acquire, release, produce and extinction a resource for which conflict with other processes occurs. These processings must be all performed via the SVC instruction.

| ⟨SVC instruction⟩ | ⟨Summary of processing⟩ | ⟨Resources to be handled⟩ |
|---|---|---|
| READ | Start input unit | Input unit |
| WRITE | Start output unit | Output unit |
| GETBUF | Acquire buffer area | Buffer area (on main memory) |
| PUTBUF | Release buffer area | Do. |
| EXEC | Start execution of process | Processor (area on main memory) |
| RESERV | Assure logic resource | Logic resource |
| FREE | Release of logic source | Do. |
| EXIT | End process | Release of all resources |

Although the information for managing the resources may be stored within the job processor 300m, it is advantageous to store it in a specific area assigned to each processor, on the main memory 200. In the embodiment of Figs. 1 and 2, reference to this information as resource management table 211, 212, ....., 21n is made during the processing of the SVC instruction. In other words, the resource is tested for the possibility of conflicting with a process which is being performed or will be possibly performed at another processor. This is the information of the type which can be predetermined for each resource unit. The flag of the resource management table are set in advance and if the flag is risen, it can be decided that allocation of resource is necessary. Moreover, in the execution of EXIT of the SVC instruction, it is necessary to release all the shared resources which the process has exclusively used. In this case, it is necessary to check for the state of the flag of the resource exclusively used.

The processing of the decision of whether the allocation of resource is necessary or not will be described with reference to an example.

When a SVC instruction which requests a processor to use a particular area of the main memory 200 for the process and the particular area of the main memory is already exclusively used by another processor, the process cannot continue processing. However, when the area is not used exclusively by any other processor, the current process, after the indication that the present processor has exclusively used the area, can continue processing.

If the area is used by another processor, or if allocation of resource is necessary, the operating system within the current processor executes a contact processing for sending a request of exclusive use of resource to the operating system processor 3001. In this contact processing, a message is sent to the operating system processor 3001 to expect the processor 3001 to process the resource management procedure.

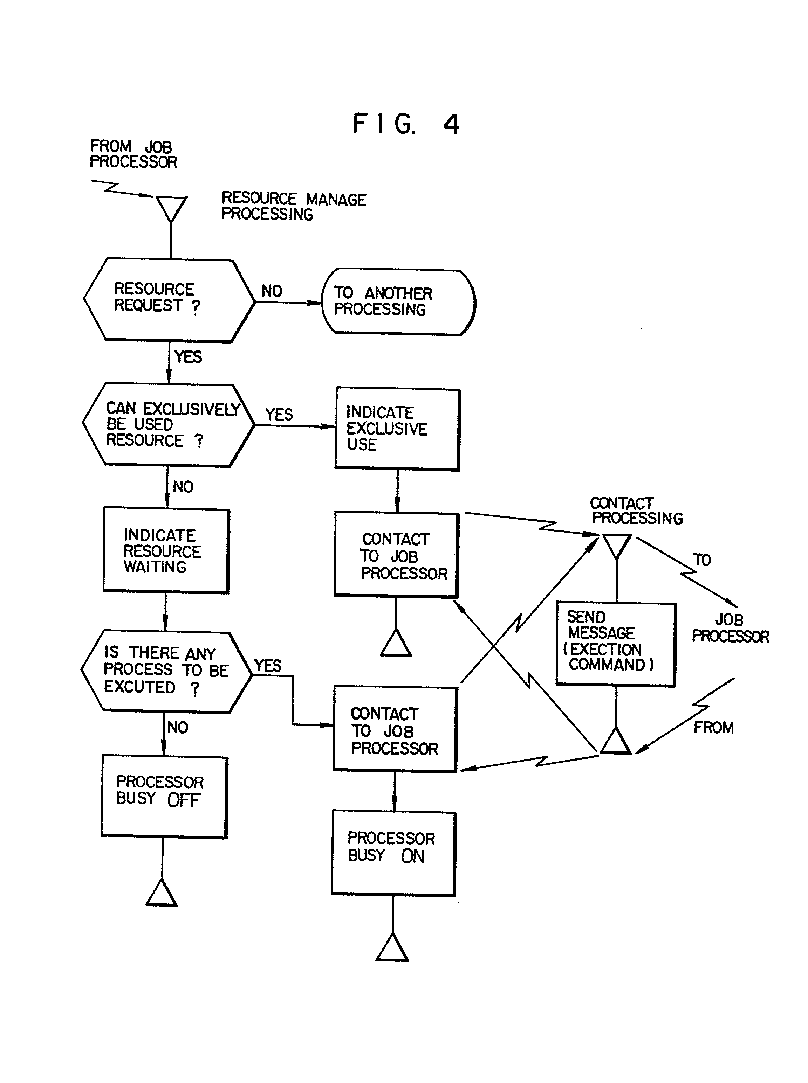

On the other hand, the operating system processor 3001 is supplied with a message from the job processor 300m to execute the resource management processing as shown in Fig. 4.

First, whether the contents of the message are the request for resource or not is checked, and if the contents are the request for resource, whether the resource of interest can be exclusively used or not is examined by referring to the resource management table 211, 212, ....., 21n. If the resource of interest can be exclusively used, it is readily indicated on the table that the processor of interest has possessed the resource, and a waiting release message is sent to the processor to continue processing. When the requested resource cannot be possessed, a resource waiting execution interrupting process is newly added to a second wait table 241, 242, ....., 24n on the main table 200 to store therein that the process is waiting. Moreover, it is checked whether or not there is any other process the job processor 300m performs. This checking is performed by referring to a first wait table 231, 232, ....., 23n on the main memory 200. If there is no process to be performed, the BUSY flag in the processor management table 221, 222, ....., 22n is turned OFF in order to indicate that the processor interrupts the execution. If there is a process to be performed by the processor, a command to execute the process other than the process waited at present is sent as a message to the processor. Thereafter, the processor turns on the BUSY flag for indicating that it is executing the process as commanded.

Here, the process which is interrupted with indication of BUSY OFF begins to be executed in the following way, for example. When the SVC instruction in other processes is EXIT, the operating system processor performs another resource management processing since there is no resource request, and in this processing, the interrupted process should be started to be performed.

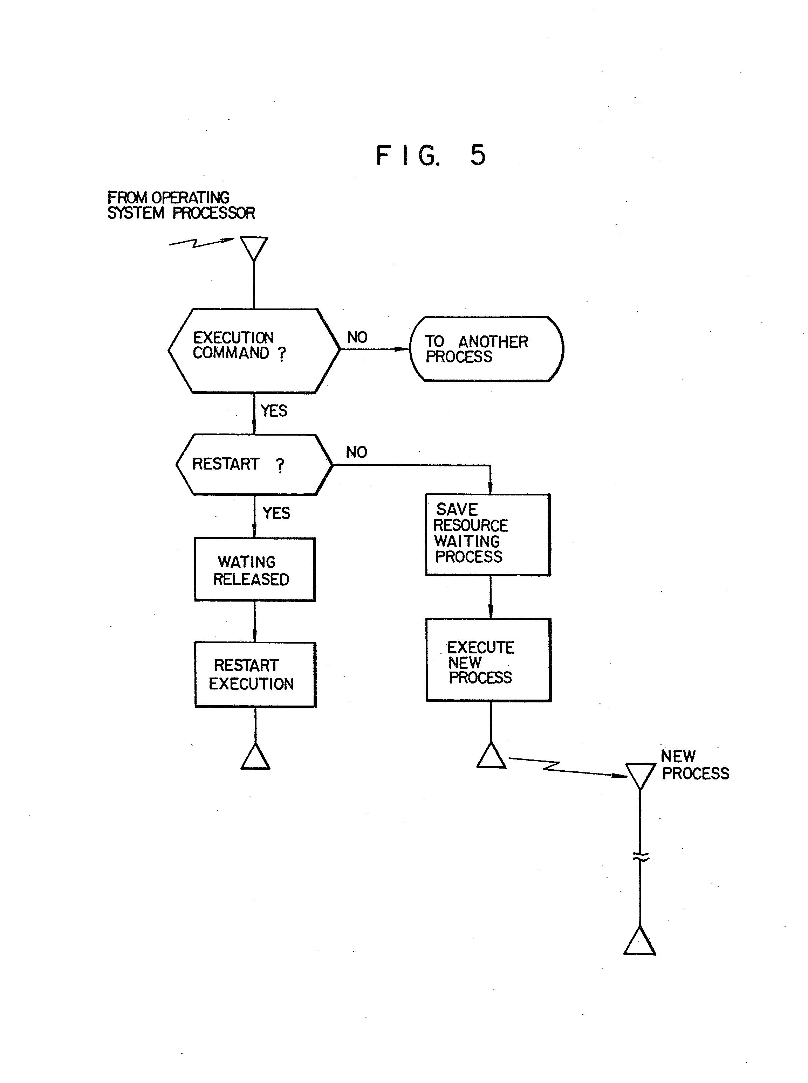

As will be evident from the above descriptions, the job processor in the process waiting condition as shown in Fig. 3 sometimes executes another process until the waiting condition is released, in which case the switching of processes is performed, and it should be performed to save the process information for the second execution of the process which was being performed. One example of the contents, which the job processor performs in accordance with the message from the operating system processor 3001, is shown in the flow chart of Fig. 5.

In the job processor, it is first checked whether or not the message is an execution command from the operating system processor 3001. If the message is an execution command therefrom, the processor executes a process, and in this case, if the process to be executed is restarting of a process which issued a resource request, any save operation is not performed, but the resource waiting is readily released so that the processing is restarted. When the process which the processor is commanded to perform indicates the execution of another process different therefrom, the process is performed after save of all information necessary when the process interrupted upon waiting resource request is restarted to be performed.

Thus, the communication control in this invention can be performed only when the save recovery processing for the process information is accurately required, thereby improving the performance of the whole system. Furthermore, since the processing of the message communication to the operating system processor 3001 is performed only when the resource management is actually required, it is enough that the job processor performs only slight interprocessor communication and therefore it is possible to realize a multiprocessor system which satisfactorily achieves the object of this invention.

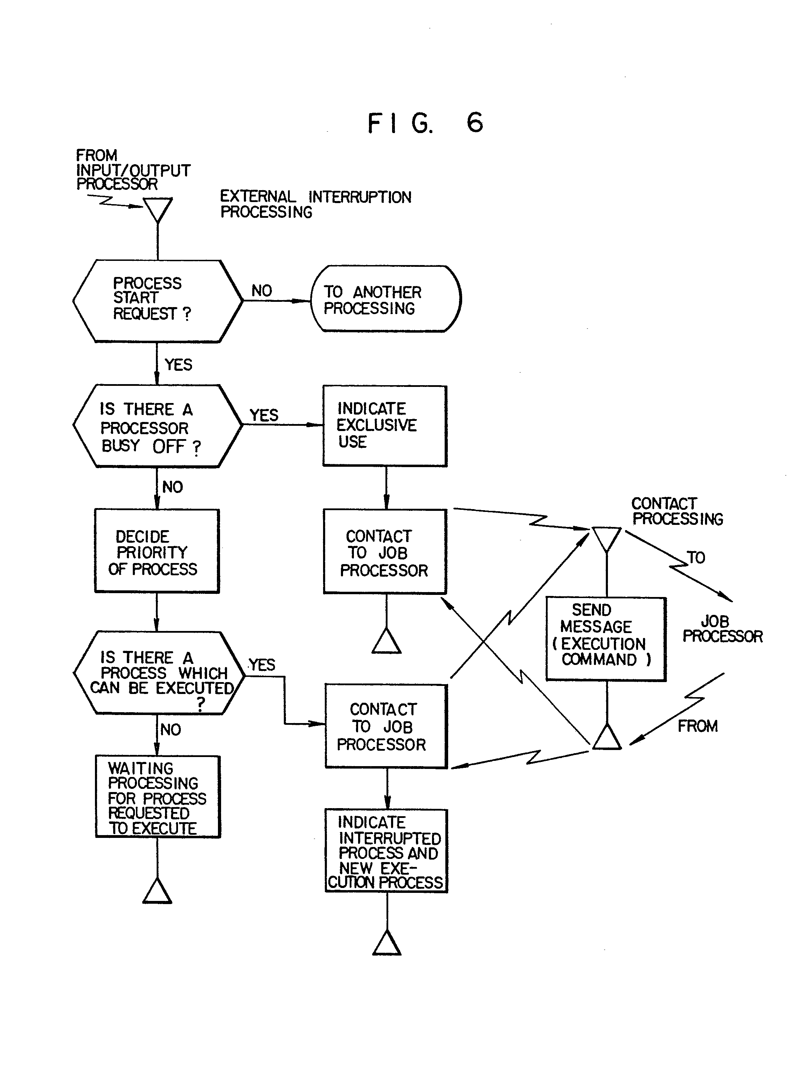

The communication control in this invention has a more excellent working effect when processes are switched by an external interruption. The external interruption is generally applied through the input/output processor 300n to the operating system processor 3001. Fig. 6 shows one example of the external interruption processing in the processor 3001. The processor 3001 checks whether the external interruption processing is process start request or not. If it is start request, it is tested whether or not there is a processor which is not busy to execute the process of interest. If there is any processor, the process is readily commanded to be executed. If all the job processors are busy, which of another active processor and a newly start-requested process is first executed is decided. If the priority order of the processor of interest is low, the process is made in the state of waiting for its execution. This state of waiting execution is released when another factor, for example, the completion of another active process or interruption processing is caused. If the priority order of the process of interest is higher than that of the active process, it is necessary that the active process be interrupted and that the process of interest be started. If the job processor performs processing as shown in the flow chart of Fig. 5, the newly started process can be executed.

As described above, the operating system processor in this invention serves to uniformly manage the shared resources, or plural processors which are possibly utilized at a time. Specifically, it has the following functions:

(1)       Allotment of a process being executed to a processor.

(2)       To distribute main memory areas, input/output units, areas on file and so on, which are necessary for execution of the process of interest, in accordance with the degree of requesting for execution of plural processes.

(3)       To accept a message of resource redistributing request from each processor and send a message of executing a process being executed to each processor in order to achieve the above functions.

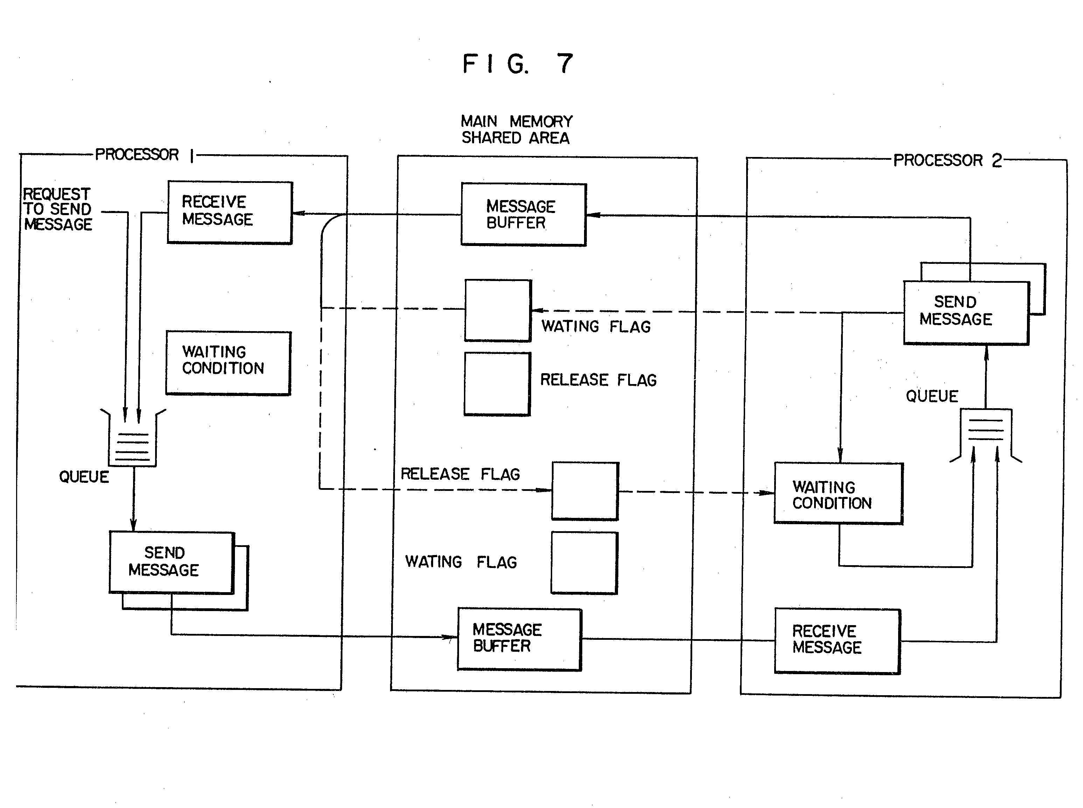

The message transmission/reception function of (3) above which has been described with reference to Figs. 3 to 6 will be totally shown in Fig. 7. Also, Fig. 7 shows an example of managing so that each processor utilizes shared areas on the main memory 200.

Since a plurality of processes are sequentially executed within the job processors, it is necessary that the message transmission request within the job processors makes waiting; a transmission message queue is formed within the operation space of a processor 1 as shown in Fig. 7. This operation space is assigned to the inside of the main memory 200 as shown in Fig. 1. Messages are sequentially taken out from this transmission message queue and supplied to the interprocessor shared area assigned to the inside of the main memory 200, and an interruption is sent to the processor 2 as an operating system processor. The operating system processor, which processes the received message, has also a multiprogramming environment in its interior and forms a received message queue for sequential processing. The processing modules of the operating system processor draw a transmission message from the queue and processes as shown in Figs. 4 and 6. The response to this processing is written as received-message processing waiting to a job processor waiting for response, of the operating processor through the message area of shared area, resulting in ending of the process of interest, or completion of interprocessor communication.

The fundamental functions necessary for this kind of interprocessor communication are existence of a shared main memory used in common among multiple processors and specific means for performing interruption communication between processors.

WHAT IS CLAIMED IS:

1.      An information processing system comprising:

a plurality of first processors (3002, ....., 300n) which can be operated independently of each other;

a second processor (3001) which can receive or send a message from or to said first processors;

memory means (200) shared by said first and second processors;

a common bus (100) connecting said first and second processors to said memory means; and

an input/output unit (4001, ....., 400n) coupled through one of said first processors or directly, to said common bus; said memory means being designed to store information of processes assigned to said first processors (3002, ....., 300n) and of whether the processes are being executed or not, information of processes waiting for said first processors (3002, ....., 300n) to execute it, information of which process possesses a shared resource and information of a process interrupted for waiting for a shared resource possessed by another process to being released from the relation with the latter process, said first processors (3002, ....., 300n) having a function of deciding whether said shared resource is necessary or not to be allocated for the execution of processes assigned thereto and of, if it is necessary, sending a message of allocation request to said second processor (3001), said second processor (3001) having a function of receiving the message of shared resource allocation request from said first processor (3002, ....,
300n) and sending a message of indicating whether the
shared resource can be possessed or not and of a process
to be executed by referring to the information stored in
the memory means, to said first processor (3002, .....,
300n) which issued said request.

2.        An information processing system according to
Claim 1, wherein said memory means (200) exists in a
particular area on a main memory.

FIG. 1

# F I G. 2

# F I G. 3

PROCESS

MACRO INSTRUCTION PROCESSING

S V C

IS REQUIRED RESOURCE ALLOCATION ?

NO

YES

CONTACT TO OPERATING SYSTEM PROCESSOR

CONTACT PROCESSING

SEND MESSAGE

TO

WAIT FOR PROCESSING

OPERATING SYSTEM PROCESSOR

RELEASE WAITING

FROM

3/7

0049521

# FIG. 4

FROM JOB
PROCESSOR

RESOURCE MANAGE
PROCESSING

RESOURCE
REQUEST ? — NO → TO ANOTHER
PROCESSING

YES

CAN EXCLUSIVELY
BE USED
RESOURCE ? — YES → INDICATE
EXCLUSIVE
USE

NO

INDICATE
RESOURCE
WAITING

CONTACT
TO JOB
PROCESSOR

CONTACT
PROCESSING

TO

SEND
MESSAGE
(EXECTION
COMMAND)

JOB
PROCESSOR

IS THERE ANY
PROCESS TO BE
EXCUTED ? — YES

NO

PROCESSOR
BUSY OFF

CONTACT
TO JOB
PROCESSOR

FROM

PROCESSOR
BUSY ON

# FIG. 5

FROM OPERATING
SYSTEM PROCESSOR

EXECUTION
COMMAND ? — NO → TO ANOTHER PROCESS

YES

RESTART ? — NO

YES

WATING RELEASED

RESTART EXECUTION

SAVE RESOURCE WAITING PROCESS

EXECUTE NEW PROCESS

NEW PROCESS

F I G. 6

FROM
INPUT/OUTPUT
PROCESSOR

EXTERNAL INTERRUPTION
PROCESSING

PROCESS START REQUEST ? —NO→ TO ANOTHER PROCESSING

YES

IS THERE A PROCESSOR BUSY OFF ? —YES→ INDICATE EXCLUSIVE USE

NO

DECIDE PRIORITY OF PROCESS

CONTACT TO JOB PROCESSOR

CONTACT PROCESSING

TO

SEND MESSAGE (EXECUTION COMMAND)

JOB PROCESSOR

IS THERE A PROCESS WHICH CAN BE EXECUTED ? —YES→ CONTACT TO JOB PROCESSOR

FROM

NO

WAITING PROCESSING FOR PROCESS REQUESTED TO EXECUTE

INDICATE INTERRUPTED PROCESS AND NEW EXE-CUTION PROCESS

# FIG. 7

MAIN MEMORY
SHARED AREA